# EUROPEAN PATENT APPLICATION

(11) **EP 2 803 902 A1**
(43) Date of publication of application: **19.11.2014**
(21) Application number: 12865004.1
(22) Date of filing: 18.12.2012
(51) Int. Cl.: F21S 8/10, F21Y 101/02

(54) **LIGHTING APPARATUS AND VEHICLE LIGHT**

(30) Priority: 12.01.2012 JP 2012004097; 28.06.2012 JP 2012145692; 29.08.2012 JP 2012188321
(71) Applicant: Koito Manufacturing Co., Ltd., Tokyo 108-8711 (JP)
(72) Inventor: IYODA, Haruhiko, Shizuoka-Shi, Shizuoka 424-8764 (JP)
(74) Representative: Algemeen Octrooi- en Merkenbureau B.V.
(86) International application number: PCT/JP2012/008079
(87) International publication number: WO 2013/105182

(57) **Abstract**

An automotive lamp includes an LED and a light guide (20). The light guide (20) has the light, emitted from the LED, enter through an incident surface (20a) and emits the light frontward from an emission surface (20b) by guiding the light inside the light guide (20). The light guide (20) includes a plurality of steps (24) on a rear face (20c) side of the peripheral surface of the light guide (20). With the plurality of steps (24), the light traveling inside the light guide (20) is reflected toward the emission surface (20b). The pitch (P) between each of the plurality of steps (24) is set to 0.5 mm or below.

## Description

### [Technical Field]

The present invention relates to an illumination device and an automotive lamp and, in particular, an illumination device and an automotive lamp using light control members such as a light guide and a lens.

### [Background Art]

In the conventional practice, known as an automotive lamp used for a tail lamp and a stop lamp is a lamp configured such that the light emitted from a light source, such as LEDs, is incident on one end surface of a rod-like light guide and is then emitted from the peripheral surface of the light guide toward a front area (see Patent Document 1, for instance).

### [Related Art Documents]

### [Patent Documents]

[Patent Document 1] Japanese Unexamined Patent Application Publication (Kokai) No. 2011-003281.

### [Disclosure of Invention]

### [Problems to be Solved by the Invention]

The light control members, such as the light guide and lens, used for the automotive lamp are generally formed of a transparent resin such as acrylic or polycarbonate. Thus the peripheral surfaces of the light guide and the lens have transparent appearances and there is still room for improvement in their textures. As a method for improving the texture on the appearance of resin molding products, the surface texturing (embossment) is conventionally known where the asperities are formed on the resin molding products.

If, however, the surface texturing is done on the peripheral surface of the light guide, the light is not totally reflected on emboss-finished surfaces and part of the light passes through outside and therefore the light cannot be sufficiently guided up to a part of the light guide located away from the light source. This makes it hard for the light guide to be controlled so that the light is desirably distributed through the light guide. Also, if the surface texturing is done on the lens, a desired light distribution may not be achieved.

The present invention has been made in view of the foregoing circumstances, and a purpose thereof is to provide an illumination device and an automotive lamp using light control members capable of improving the texture on the appearance thereof while the light distribution is appropriately controlled by the light control members.

### [Means for Solving the Problem]

In order to resolve the above-described problems, an illumination device includes: a light source mounting part for mounting a light source thereon; and a light control member configured to emit light frontward by controlling the light emitted from the light source. The light control member includes a plurality of steps with which the light emitted from the light source is controlled. A pitch of the plurality of steps is less than or equal to 0. 5 mm.

By employing this embodiment, the pitch between the plurality of steps formed in the light control member is set to 0.5 mm or below. Thus, a viewer can be given an impression as if the light control member were subjected to the surface texturing. As a result, the texture on the appearance of the illumination device can be improved. Also, the embossed appearance thereof is achieved by adjusting the pitch of the steps, so that a desired light distribution can be achieved unlike in the case where the surface texturing is actually done on the light control member.

The light control member may be a light guide that has the light, emitted from the light source, enter from one end surface thereof and that emits the light frontward from an emission surface along an extending direction by guiding the light inside the light guide. The plurality of steps of the light guide may reflect the light traveling inside the light guide toward the emission surface. The plurality of steps may include a plurality of triangle-shaped steps.

The light control member may be a lens where a plurality of steps are formed in order to emit the light, emitted from the light source, as light having a required light distribution characteristic. The plurality of steps formed in the lens may include a plurality of fish-eye steps arranged in grids. The plurality of steps formed in the lens may include a plurality of cylindrical steps arranged side by side in a predetermined direction.

A radius of curvature R of each of the plurality of steps formed in the lens may be set such that R ≤ 1 mm. When a pitch between each of the plurality of steps formed in the lens is denoted by P, the radius of curvature R of each step may be set such that R ≤ P×2.

Another embodiment of the present invention is an automotive lamp including the above-described illumination device.

### [Advantageous Effects]

The present invention provides an illumination device and an automotive lamp using light control members capable of improving the texture on the appearance thereof while the light distribution is appropriately controlled by the light control members.

### [Brief Description of Drawings]

FIG. 1 is a cross-sectional view of an automotive lamp according to a first embodiment of the present invention;
FIG. 2 is an enlarged view of part of a light guide on a rear face side;
FIG. 3 is a cross-sectional view of the light guide shown in FIG. 2 taken along the line X-X;
FIGS. 4A to 4C are photographs each showing a surface appearance of a light guide when the pitch of steps is varied;
FIG. 5A and 5B are diagrams for explaining the pitch of steps;
FIG. 6 is a cross-sectional view of an automotive lamp according to a second embodiment of the present invention;
FIG. 7 is a perspective view of part of an incident surface of an inner lens;
FIG. 8A is a front view of part of an inner lens;
FIG. 8B is a cross-sectional view of part of an inner lens;
FIG. 9 is a photograph showing surface appearances of inner lenses when the pitch of fish-eye steps is varied;
FIG. 10 shows a modification of steps formed in an inner lens;
FIGS. 11A and 11B are diagrams for explaining an automotive lamp according to a third embodiment of the present invention;
FIG. 12 is a schematic cross-sectional view for explaining a ceiling lamp according to a fourth embodiment of the present invention; and
FIG. 13 is a schematic cross-sectional view for explaining a street lamp according to a fifth embodiment of the present invention.

### [Modes for Carrying Out the Invention]

Hereinafter, a detailed description is given of embodiments of the present invention with reference to drawings. In the following embodiments, first to third embodiments each shows an automotive lamp, which is an illumination device, applied to a vehicle. A fourth embodiment shows a ceiling lamp, which is also an illumination device, used mainly for interior illumination. A fifth embodiment shows a street lamp, which is also an illumination device, used mainly for outdoor illumination.

### (First Embodiment)

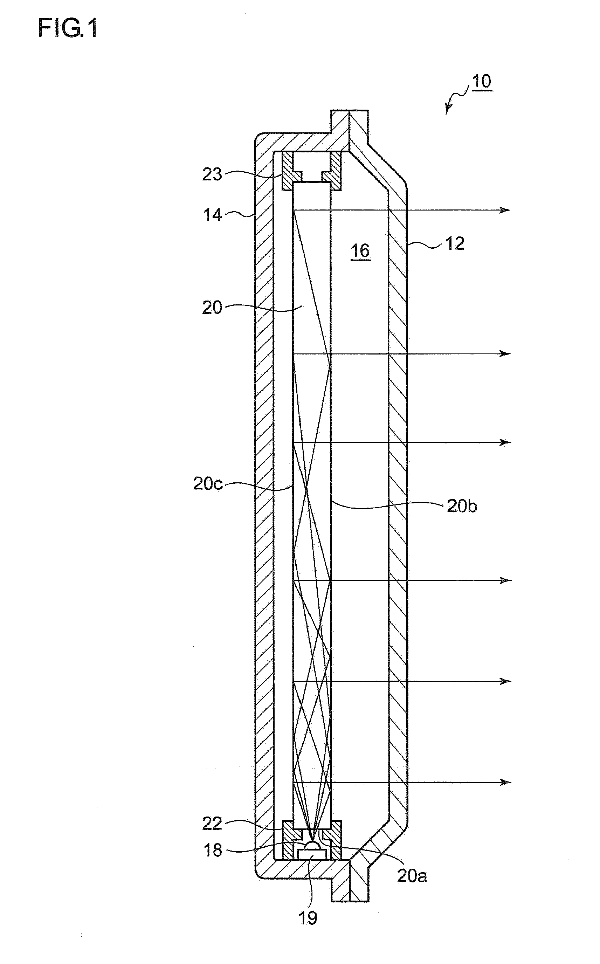

FIG. 1 is a cross-sectional view of an automotive lamp 10 according to a first embodiment of the present invention. The automotive lamp 10 according to the first embodiment may be used as a tail lamp or a stop lamp provided at a rear part of the vehicle.

The automotive lamp 10 includes a lamp body 14 and a transparent cover 12, which covers an opening in front of the lamp body 14. The lamp body 14 and the cover 12 form a lamp chamber 16. And an LED 18 and a light guide 20 are provided inside the lamp chamber 16.

The light guide 20 is a rod-like member produced through the injection molding of a transparent resin such as acrylic or polycarbonate. Although, in FIG. 1, the light guide 20 is of a linear shape, the shape of the light guide 20 is not limited to any particular one and may be a curve shape, for example. Although in the present embodiment the cross-sectional shape of the light guide 20 perpendicular to an extending direction (longer direction) thereof is an approximately circular shape, the cross-section shape thereof is not limited to any particular one and may be a quadrangular shape, for example. The light guide 20 is immovably supported by support members 22 and 23 secured to both sides of the lamp body 14.

One of end surfaces of the light guide 20 functions as an incident surface 20a that receives light emitted from the LED 18. A front side on the peripheral surface of the light guide 20 functions as an emission surface 20b that emits the light. A plurality of steps, with which the light traveling inside the light guide 20 is reflected toward the emission surface 20b, are formed, on a rear face 20c on the peripheral surface of the light guide 20, along an extending direction of the light guide 20. The "steps" will be discussed later.

The LED 18 is a light source that provides light into the light guide 20. The LED 18 is mounted on a light source mounting part 19 fixed to a side of the lamp body 14 such that the LED 18 faces the incident surface 20a of the light guide 20.

A description is now given of an operation of the automotive lamp 10 configured as described above. Light rays emitted from the automotive lamp 10 are shown in FIG. 1. As the electric current is supplied to the LED 18 in the automotive lamp 10, light is emitted from the LED 18. The light emitted from the LED 18 enters into the light guide 20 through the incident surface 20a. The light that has entered into the light guide 20 repeats total reflection and travels inside the light guide 20. The light that travels inside the light guide 20 and then enters steps provided on the rear face 20c of the light guide 20 is reflected toward the emission surface 20b by the steps and emitted from the emission surface 20b. Similar reflection occurs at each step provided along the extending direction of the light guide 20 with the result that the light is emitted from an approximately whole region of the emission surface 20b along the extending direction of the light guide 20. The light emitted from the emission surface 20b is irradiated toward a front area of the lamp through the cover 12.

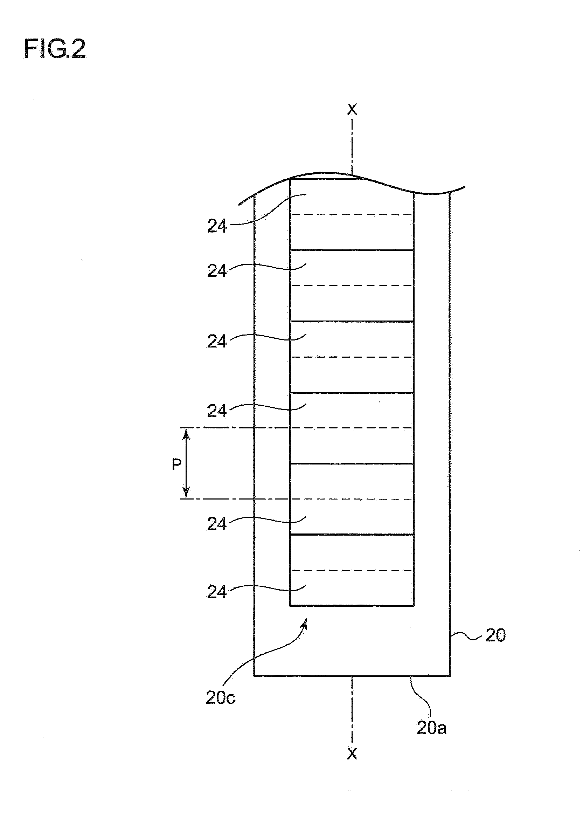

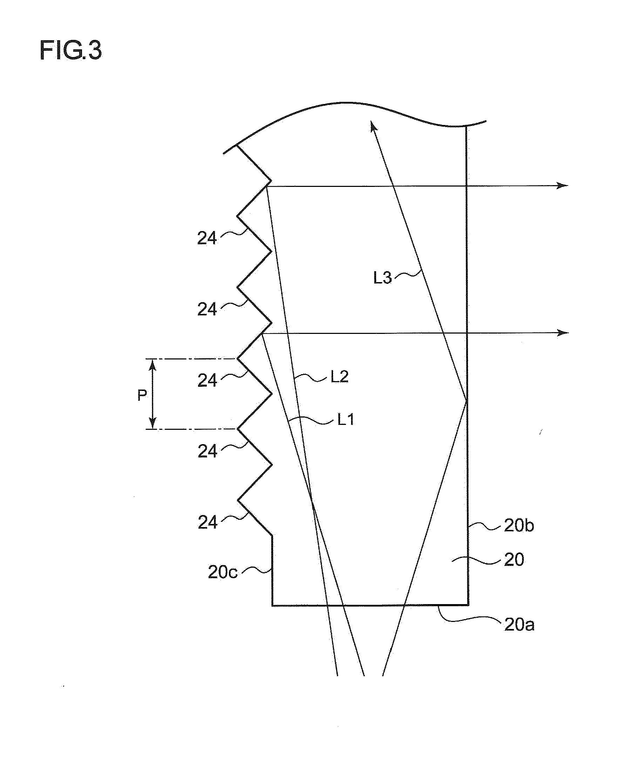

A detailed description is now given of the steps formed in the light guide 20. FIG. 2 is an enlarged view of part of the light guide 20 on a rear face 20c side (near the incident surface 20a). FIG. 3 is a cross-sectional view of the light guide 20 shown in FIG. 2 taken along the line X-X. As shown in FIG. 2 and FIG. 3, a plurality of steps 24 are formed in strips along the extending direction of the light guide 20 on the rear face 20c of the light guide 20. The shape of each step 24 is a triangular prism, and the cross section thereof along the extending direction is an isosceles triangle shape as shown in FIG. 3. The surface of each step 24 is subjected to mirror-like finishing for the purpose of having the light traveling inside the light guide 20 internally reflected. The mirror-like finishing may be done by increasing the flatness of the surfaces of the steps 24 or subjecting the surfaces thereof to aluminum evaporation or like processing. Note here that the cross-sectional shape of each step 24 is not limited to any particular one. In the present embodiment, the steps are arranged closely connected with each other. However, this should not be considered as limiting and the steps may be arranged dispersively at some intervals. Also, the cross-sectional shape of each step 24 may be such that a base end or tip end of each step 24 has rounded corners.

The paths of light entering inside the light guide 20 from the incident surface 20a are shown in the cross-sectional view of FIG. 3. Light rays L1 and L2 are internally reflected by the respective steps 24 and are emitted to the exterior through the emission surface 20b. A light ray L3 is totally reflected by the emission surface 20b and travels inside the light guide 20. As shown in FIG. 3, the steps 24 have a function of internally reflecting part of light traveling inside the light guide 20 and emitting it to the exterior through the emission surface 20b. Appropriately designing the shape of the steps 24 allows the light guide to be controlled so that the light is desirably distributed.

In the present embodiment, a plurality of steps 24 are arranged so that a pitch P is in a range of 0.3 mm to 0.5 mm (both inclusive). Arranging the steps 24 such that the pitch P is set between 0.3 mm and 0.5 mm allows the viewer to see, when the light guide 20 is viewed from an emission surface 20b side, as if the emission surface 20b underwent the surface texturing. As a result, the texture of the light guide 20 can be improved.

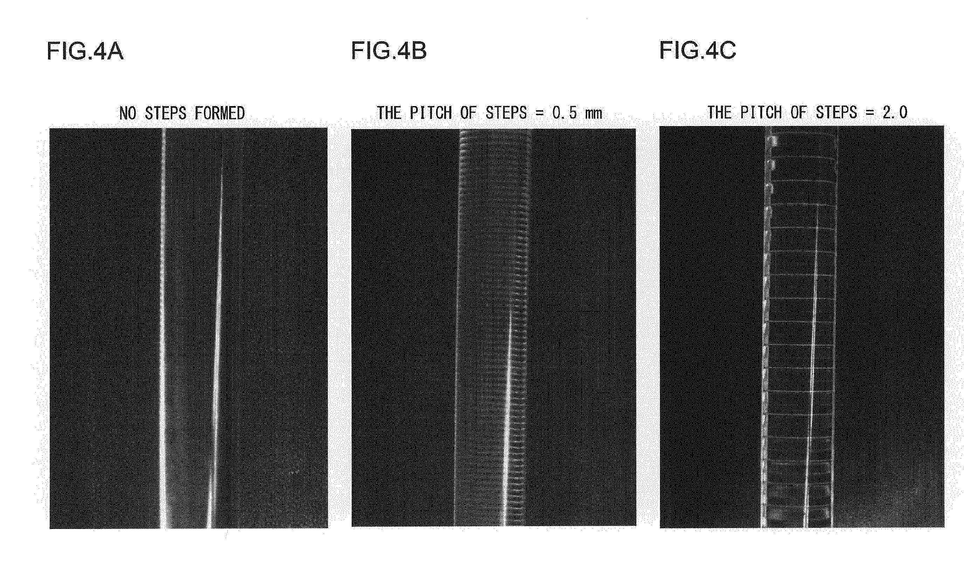

FIGS. 4A to 4C are photographs each showing the surface appearance of a light guide when the pitch of steps is varied. FIG. 4A shows a light guide where no steps are formed. FIG. 4B shows a light guide where steps whose pitch P is 0.5 mm are formed. FIG. 4C shows a light guide where steps whose pitch P is 2.0 mm are formed. The photographs of the light guides shown in FIG. 4A to 4C are those taken from an emission surface side of each light guide.

As shown in FIG. 4B, the light guide formed by the steps whose pitch P is 0.5 mm has a reduced transparency over the light guide shown in FIG. 4A where no steps is formed. And the light guide shown in FIG. 4B looks whitish and the appearance thereof is similar to that of a light guide where the surface texturing has been applied to the emission surface. On the other hand, as shown in FIG. 4C, the light guide formed by the steps whose pitch P is 2.0 mm does not have so much reduced transparency over the light guide shown in FIG. 4A. Thus, the appearance of the light guide shown in FIG. 4C is obviously different from that of the light guide where the surface texturing has been applied to the emission surface. Since the light guide shown in FIG. 4C has a large pitch, the boundaries between the steps are visually quite conspicuous.

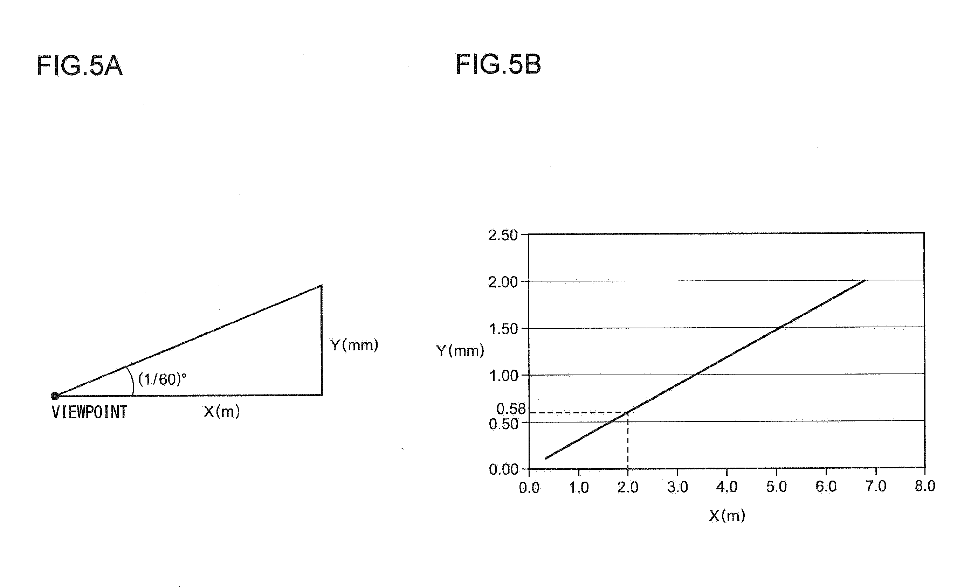

FIG. 5A and 5B are diagrams for explaining the pitch of steps. A general visual angle of a normal person is said to be able to identify two points located apart from each other by a minute (1/60 degrees), which is a resolution capability of so-called "eyesight 1.0". In other words, a person of "eyesight 1.0" is said to have a resolution capability equal to tan(1/60)° = 0.29×10⁻⁴. If, as shown in FIG. 5A, a distance from a viewpoint to a step is denoted by X (the unit is in meters) and if the minimum pitch that a person of eyesight 1.0 can distinguish two adjacent steps is denoted by Y (mm), the distance X and the step pitch Y are related to each other as shown in FIG. 5B.

It is evident from FIG. 5B that if the person of eyesight 1.0 views the step from a position 2.0 m away, he/she can distinguish the two adjacent steps as long as the step pitch is 0.58 mm or above but he/she cannot distinguish them if the step pitch is less than 0.58 mm. Thus, if as in the present embodiment the step pitch is so formed as to be 0.5 mm or below, the person of eyesight 1.0 can be given an impression on the appearance of the light guide as if the light guide underwent the surface texturing. If, however, the step pitch is set to too small a size, such as 0.1 mm or below, the appearance of the light guide will look like a case where no processing has been done to the light guide and therefore the embossed appearance thereof cannot be achieved. The steps of the light guide are formed using a normal mold. If, however, the pitch step is set to too small a size, the formation of the mold may not be possible or may be very costly. Thus, as in the present embodiment, setting the step pitch to 0.3 mm or above can suppress the increase in cost while the embossed appearance is kept.

As described above, by employing the automotive lamp 10 according to the first embodiment, the pitch between the plurality of steps 24 formed on a rear face 20c side of the light guide 20 is set in a range of 0.3 mm to 0.5 mm (both inclusive). Thus, the viewer can be given an impression as if the light guide were subjected to the surface texturing. As a result, the texture on the appearance of the automotive lamp 10 can be improved. Also, in the first embodiment, the embossed appearance thereof is achieved by adjusting the pitch of the steps 24, so that the light can be sufficiently guided up to a part of the light guide 20 located away from the LED 18 and therefore the light guide 20 can be controlled to produce a desired light distribution, unlike in the case where the surface texturing is actually done on the light guide.

Although, in the automotive lamp 10 according to the present embodiment, the LED is used as the light source, other light sources such as a bulb may be used instead.

### (Second Embodiment)

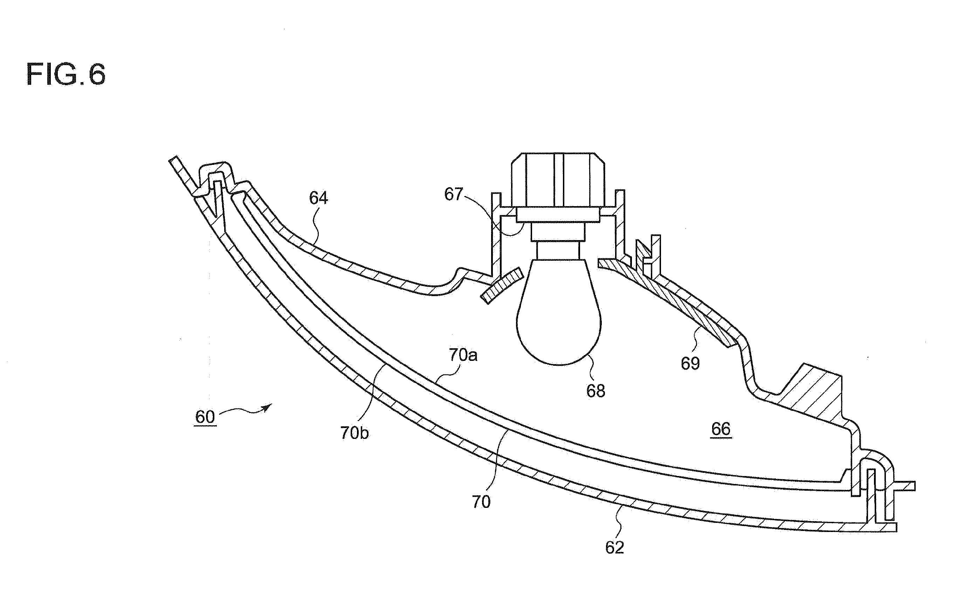

FIG. 6 is a cross-sectional view of an automotive lamp 60 according to a second embodiment of the present invention. The automotive lamp 60 according to the second embodiment may also be used as a tail lamp or a stop lamp provided at a rear part of the vehicle.

The automotive lamp 60 includes a lamp body 64 and a transparent outer lens 62, which covers an opening in front of the lamp body 64. The outer lens 62 is so formed as to be curved from a front area of the lamp toward the right and left sides. The lamp body 64 and the outer lens 62 form a lamp chamber 66. And provided inside the lamp chamber 66 are a bulb 68 functioning as a light source, a bulb socket 67 serving as a light source mounting part, a reflector 69 reflecting the light emitted from the bulb 68, and an inner lens 70 that controls the direct light from the bulb 68 and the light reflected from the reflector 69 and then emits them toward the outer lens 62.

The bulb 68 is supported by the bulb socket 67, which is mounted to the lamp body 64, so as to be electrically connected thereto. The reflector 69 is so provided as to surround the bulb 68 from a back side of the bulb 68 and is supported by the lamp body 64.

The inner lens 70 is formed along the outer lens 62 and is supported by the lamp body 64. An emission surface 70b of the inner lens 70 (i.e., a surface of the inner lens 70 on an outer lens 62 side) is spaced apart by a predetermined distance from the outer lens 62. A plurality of steps, which is used to control the direct light from the bulb 68 and the light reflected from the reflector 69, are formed on an incident surface 70a (i.e., a surface of the inner lens 70 on a bulb 68 side).

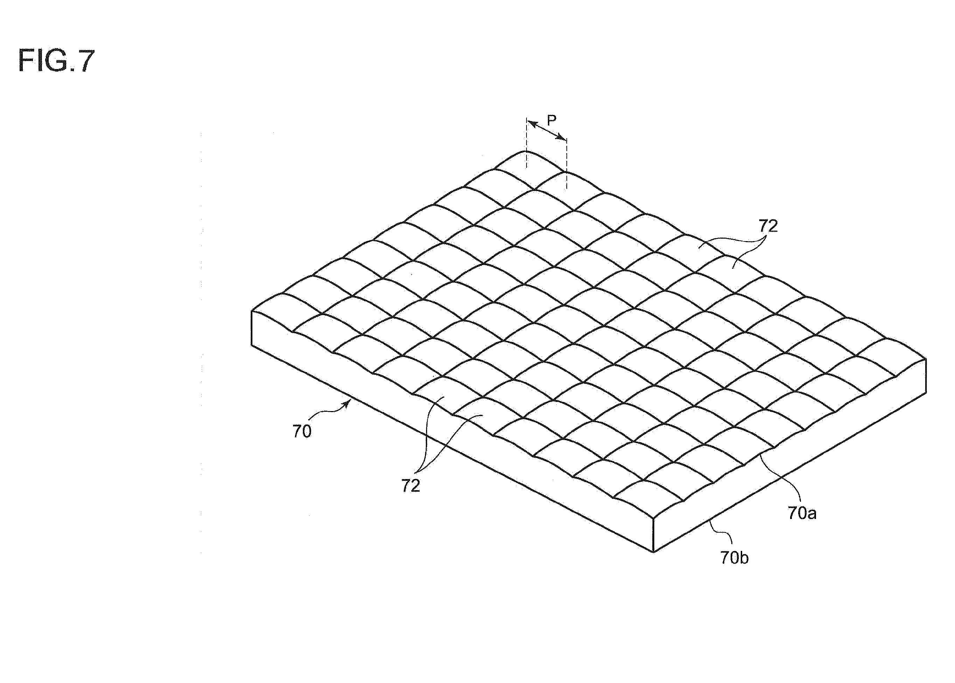

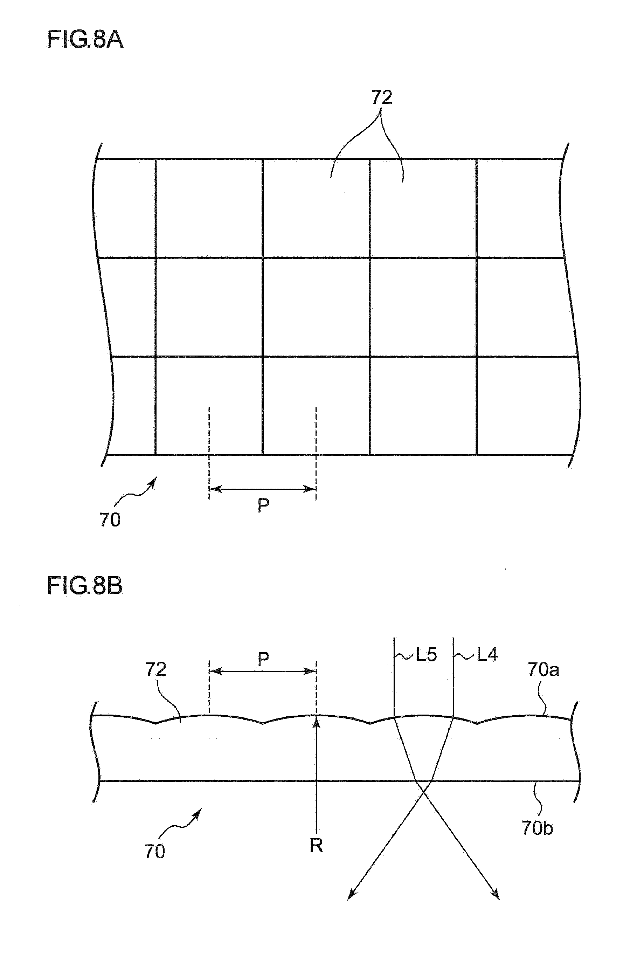

A detailed description is now given of the steps formed in the inner lens 70. FIG. 7 is a perspective view of part of the incident surface 70a of the inner lens 70. FIG. 8A is a front view of part of the inner lens 70. FIG. 8B is a cross-sectional view of part of the inner lens 70.

As shown in FIG. 7 and FIGS. 8A and 8B, a plurality of convex-shape fish-eye steps 72 are formed in grids on the incident surface 70a of the inner lens 70. Each fish-eye step 72 has a quadrangular shape when viewed from the front and has a convex curve surface in cross section. The plurality of fish-eye steps 72 have a function of diffusing the direct light from the bulb 68 and the light reflected from the reflector 69 by refracting them and emitting the thus diffused light as light having a required light distribution characteristic. FIG. 8B shows light rays L4 and L5 that enter the incident surface 70a of the inner lens 70 and emits through an emission surface 70b. In order to achieve the required light distribution characteristic, the shape of the fish-eye steps 72 may be changed depending on the positions of the fish-eye steps 72.

In the present embodiment, a plurality of fish-eye steps 72 are arranged so that the pitch P is in a range of 0.3 mm to 0.5 mm (both inclusive). Although the pitches in two array directions of steps, which are perpendicular to each other, are identical, they may differ from each other instead. Arranging a plurality of fish-eye steps 72 such that the pitch P is set between 0.3 mm and 0.5 mm allows the viewer to see, when the inner lens 70 is viewed from an emission surface 70b side, as if the inner lens 70 underwent the surface texturing. As a result, the texture of the inner lens 70 can be improved.

The fish-eye steps 72 may be formed such that a radius of curvature R thereof satisfies P/2 ≤ R ≤ 1 mm. Or alternatively, the fish-eye steps 72 may be formed such that the radius of curvature R thereof satisfies P/2 ≤ R ≤ P×2. Where these conditions are met, the incident light can be extensively diffused. Further, where these conditions are met, the radius of curvature R is relatively small and thus an angular aperture becomes larger or a magnifying power becomes larger. As a result, the depth of focus becomes narrower and an object looks blurry. This can suppress the components built in the lamp chamber (e.g., electric circuits) from being seen through and can improve designability of lamps.

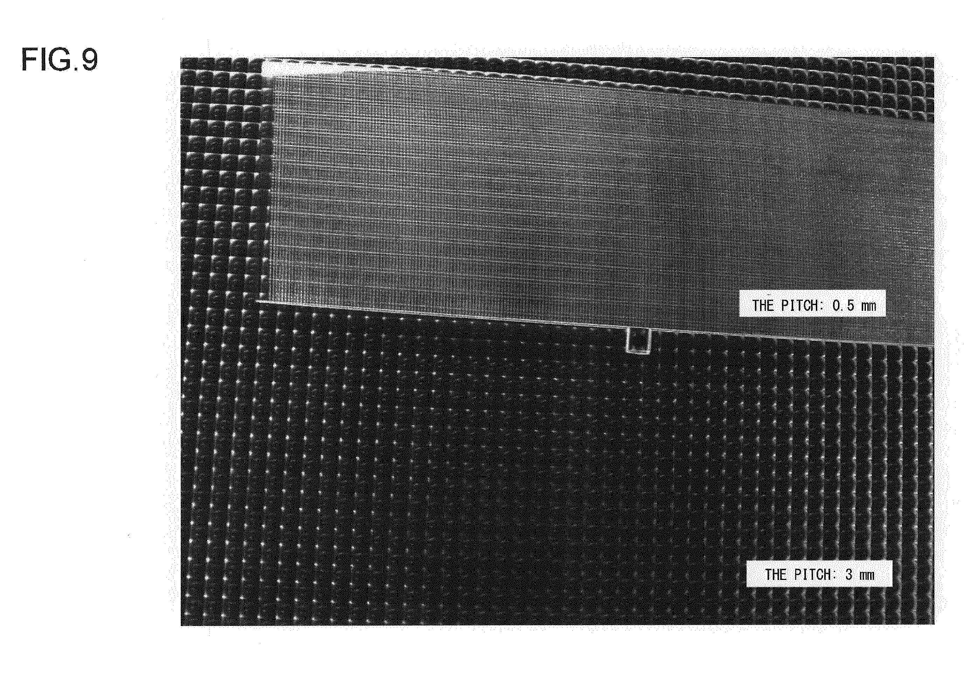

FIG. 9 is a photograph showing surface appearances of inner lenses when the pitch of fish-eye steps is varied. In FIG. 9, a photograph is taken where one inner lens is placed on another inner lens; a fish-eye lens whose pitch P is 0.5 mm is formed on the one inner lens, and a fish-eye lens whose pitch is 3 mm is formed on the other inner lens.

As shown in FIG. 9, the inner lens where the fish-eye step whose pitch P is 0.5 mm looks whitish and a viewer can be given an impression on the appearance of the inner lens as if the inner lens underwent the surface texturing. On the other hand, the inner lens where the fish-eye step whose pitch P is 3 mm has a large pitch. This makes the boundaries between the fish-eye steps visually quite conspicuous and thus the appearance of this inner lens is obviously different from an embossed appearance.

As described above, by employing the automotive lamp 60 according to the second embodiment, the pitch of fish-eye steps formed on the incident surface 70a of the inner lens 70 is set in a range of 0.3 mm to 0.5 mm (both inclusive). Thus, the viewer can be given an impression as if the inner lens were subjected to the surface texturing. As a result, the texture on the appearance of the automotive lamp 60 can be improved. Also, in the second embodiment, the embossed appearance thereof is achieved by adjusting the pitch of the fish-eye steps, so that the direct light from the bulb 68 and the light reflected from the reflector 69 can be controlled as designed in the first place so as to produce a desired light distribution, unlike in the case where the surface texturing is actually done on the light guide.

In the above-described second embodiment, the convex-shape fish-eye steps 72 are formed on the incident surface 70a of the inner lens 70. In substitution for or in addition to these convex-shape fish-eye steps, concave-shape fish-eye steps may be formed. Also, the fish-eye steps 72 may be provided over approximately entire region of the incident surface 70a of the inner lens 70 or may be provided on a partial region thereof. Also, in the above-described second embodiment, the fish-eye steps 72 are formed on the incident surface 70a of the inner lens 70. In substitution for or in addition to these fish-eye steps, the fish-eye steps may be formed on the emission surface 70b of the inner lens 70.

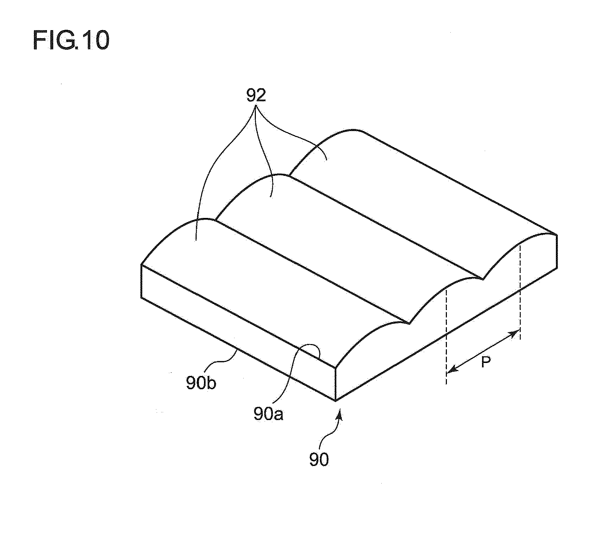

FIG. 10 shows a modification of steps formed in the inner lens. As shown in FIG. 10, a plurality of convex-shape cylindrical steps 92 may be arranged, on an incident surface 90a of an inner lens 90, side by side in a predetermined direction. Or alternatively, concave-shape cylindrical steps may be arranged side by side in a predetermined direction. In this case, too, the pitch of the plurality of cylindrical steps 92 is set in a range of 0.3 mm to 0.5 mm (both inclusive). This allows the viewer to see, when the inner lens 90 is viewed from an emission surface 90b side, as if the inner lens 90 underwent the surface texturing. As a result, the texture of the inner lens 90 can be improved. The cylindrical steps may be formed on the emission surface 90b in substitution for or in addition to the incident surface 90a.

### (Third Embodiment)

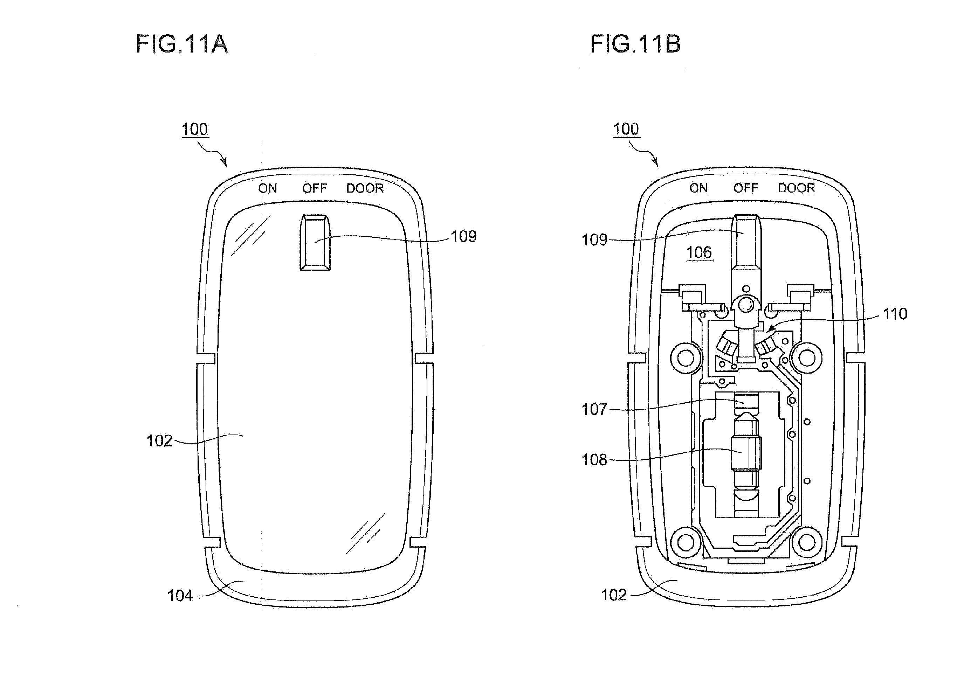

FIGS. 11A and 11B are diagrams for explaining an automotive lamp 100 according to a third embodiment of the present invention. The automotive lamp 100 according to the third embodiment is used as an interior lamp for use in a vehicle. FIG. 11A is a front view showing an appearance of the automotive lamp 100. FIG. 11B is a front view showing an internal structure of the automotive lamp 100.

The automotive lamp 100 includes a lamp body 104 and a lens 102, which covers an opening in front of the lamp body 104. FIG. 11B illustrates the automotive lamp 100 with the lens 102 removed from the lamp body 104. The lamp body 104 and the lens 102 form a lamp chamber 106. And provided inside the lamp chamber 106 are a light bulb 108 functioning as a light source, a light bulb mounting part 107, a switch knob 109, an electric circuit 110 used to switch on/off of the light bulb 108 in response to an operation of the switch knob 109, and so forth. The switch knob 109 is exposed outside the lens 102.

In the automotive lamp 100 according to the present embodiment, a plurality of steps are formed on an internal surface of the lens 102 (an incident surface of the lens 102 receiving the light from the light bulb 108). These steps may be similar to the fish-eye steps 72 formed in grids shown in FIG. 7 or the cylindrical steps 92 arranged side by side in a predetermined direction shown in FIG. 10. These steps have a function of diffusing the light emitted from the light bulb 108 by refracting it and emitting the thus diffused light as light having a required light distribution characteristic.

A plurality of steps formed on the internal surface of the lens 102 are arranged so that the pitch P is in a range of 0.3 mm to 0.5 mm (both inclusive). Arranging a plurality of steps such that the pitch P is set between 0.3 mm and 0.5 mm allows the viewer to see, when the lens 102 is viewed from an emission surface side, as if the lens 102 underwent the surface texturing. As a result, the texture of the lens 102 can be improved.

The steps formed on the internal surface of the lens 102 may be formed such that the radius of curvature R thereof satisfies P/2 ≤ R ≤ 1 mm. Or alternatively, these steps may be formed such that the radius of curvature R thereof satisfies P/2 ≤ R ≤ P×2. Where these conditions are met, the incident light from the light bulb 108 can be extensively diffused. Further, where these conditions are met, the radius of curvature R is relatively small and thus the angular aperture becomes larger or the magnifying power becomes larger. As a result, the depth of focus becomes narrower and an object looks blurry. This can suppress the components built in the lamp chamber 106 (e.g., the electric circuit 110) from being seen through and can improve designability of lamps.

### (Fourth Embodiment)

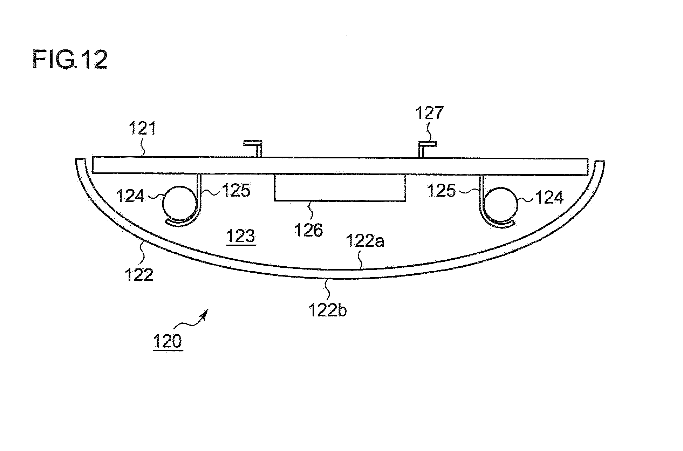

FIG. 12 is a schematic cross-sectional view for explaining a ceiling lamp 120 according to a fourth embodiment of the present invention.

As shown in FIG. 12, the ceiling lamp 120 includes a lamp body 121 and a cover 122, which covers an opening in front of the lamp body 121. The lamp body 121 and the cover 122 form a lamp chamber 123. And provided inside the lamp chamber 123 are a circular lamp 124 functioning as a light source, a lamp mounting part 125 for mounting the lamp 124 thereon, an electric circuit 126 for controlling the lighting of the lamp 124, and a mounting section 127 for mounting the ceiling lamp 120 to a ceiling. The type of the lamp 124 is not limited to any particular one and it may be a fluorescent lamp or LED lamp.

In the ceiling lamp 120 according to the present embodiment, a plurality of steps are formed on an internal surface 122a of the cover 122 (an incident surface of the cover 122 receiving the light from the lamp 124). These steps may be similar to the fish-eye steps 72 formed in grids shown in FIG. 7 or the cylindrical steps 92 arranged side by side in a predetermined direction shown in FIG. 10. These steps have a function of diffusing the light emitted from the lamp 124 by refracting it and emitting the thus diffused light as light having a required light distribution characteristic.

A plurality of steps formed on the internal surface 122a of the cover 122 are arranged so that the pitch P is in a range of 0.3 mm to 0.5 mm (both inclusive). Arranging a plurality of steps such that the pitch P is set between 0.3 mm and 0.5 mm allows the viewer to see, when the cover 122 is viewed from an emission surface 122b side, as if the cover 122 underwent the surface texturing. As a result, the texture of the cover 122 can be improved.

The steps formed on the internal surface 122a of the cover 122 may be formed such that the radius of curvature R thereof satisfies P/2 ≤ R ≤ 1 mm. Or alternatively, these steps may be formed such that the radius of curvature R thereof satisfies P/2 ≤ R ≤ P×2. Where these conditions are met, the incident light from the lamp 124 can be extensively diffused. Further, where these conditions are met, the radius of curvature R is relatively small and thus the angular aperture becomes larger or the magnifying power becomes larger. As a result, the depth of focus becomes narrower and an object looks blurry. This can suppress the components built in the lamp chamber 123 (e.g., the lamp mounting part 125 and the electric circuit 126) from being seen through and can improve designability of the ceiling lamp 120.

In the present embodiment, the lamp 124 may be a lamp using the LED and the light guide used in the automotive lamp 10 described and shown in the first embodiment. In such a case, in substitution for or in addition to the formation of the aforementioned plurality of steps on the internal surface 122a of the cover 122, a plurality of steps having the pitch ranging from 0.3 mm to 0.5 mm may be formed on the light guide, similarly to the automotive lamp 10 according to the first embodiment. This can allow a viewer to be given an impression as if the light guide were subjected to the surface texturing. As a result, the texture on the appearance of the ceiling lamp 120 can be improved.

Although, in the present embodiment, the ceiling lamp 120 is exemplified as an illumination device for indoor use, the illumination device for indoor use is not limited thereto and it may be, for example, a pendant lamp hung from the ceiling using chains or the like.

### (Fifth Embodiment)

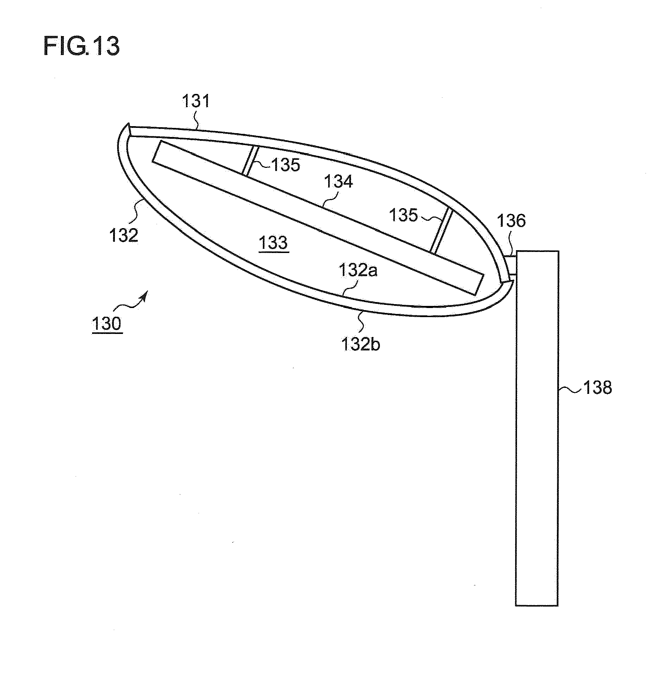

FIG. 13 is a schematic cross-sectional view for explaining a street lamp 130 according to a fifth embodiment of the present invention.

As shown in FIG. 13, the street lamp 130 includes a lamp body 131 and a cover 132, which covers an opening in front of the lamp body 131. The lamp body 131 and the cover 132 form a lamp chamber 133. And provided inside the lamp chamber 133 are a lamp 134 functioning as a light source, a lamp mounting part 135 for mounting the lamp 134 thereon, and a mounting section 136 for mounting the street lamp 130 to a supporting column 138. The type of the lamp 134 is not limited to any particular one and it may be a fluorescent lamp or LED lamp.

In the street lamp 130 according to the present embodiment, a plurality of steps are formed on an internal surface 132a of the cover 132 (an incident surface of the cover 132 receiving the light from the lamp 134). These steps may be similar to the fish-eye steps 72 formed in grids shown in FIG. 7 or the cylindrical steps 92 arranged side by side in a predetermined direction shown in FIG. 10. These steps have a function of diffusing the light emitted from the lamp 124 by refracting it and emitting the thus diffused light as light having a required light distribution characteristic.

A plurality of steps formed on the internal surface 132a of the cover 132 are arranged so that the pitch P is in a range of 0.3 mm to 0.5 mm (both inclusive). Arranging a plurality of steps such that the pitch P is set between 0.3 mm and 0.5 mm allows the viewer to see, when the cover 132 is viewed from an emission surface 132b side, as if the cover 132 underwent the surface texturing. As a result, the texture of the street lamp 130 can be improved.

The steps formed on the internal surface 132a of the cover 132 may be formed such that the radius of curvature R thereof satisfies P/2 ≤ R ≤ 1 mm. Or alternatively, these steps may be formed such that the radius of curvature R thereof satisfies P/2 ≤ R ≤ P×2. Where these conditions are met, the incident light from the lamp 134 can be extensively diffused. Further, where these conditions are met, the radius of curvature R is relatively small and thus the angular aperture becomes larger or the magnifying power becomes larger. As a result, the depth of focus becomes narrower and an object looks blurry. This can suppress the components built in the lamp chamber 133 (e.g., the lamp mounting part 135 and an electric circuit (not shown)) from being seen through and can improve designability of the street lamp 130.

In the present embodiment, the lamp 134 may be a lamp using the LED and the light guide used in the automotive lamp 10 described and shown in the first embodiment. In such a case, in substitution for or in addition to the formation of the aforementioned plurality of steps on the internal surface 132a of the cover 132, a plurality of steps having the pitch ranging from 0.3 mm to 0.5 mm may be formed on the light guide, similarly to the automotive lamp 10 according to the first embodiment. This can allow a viewer to be given an impression as if the light guide were subjected to the surface texturing. As a result, the texture on the appearance of the street lamp 130 can be improved.

Although, in the present embodiment, the street lamp 130 is exemplified as an illumination device for outdoor use, the illumination device for outdoor use is not limited thereto and it may be, for example, an outdoor light mounted on a house's external wall or the like.

The present invention has been described based upon illustrative embodiments. These embodiments are intended to be illustrative only and it will be obvious to those skilled in the art that various modifications to constituting elements and processes could be developed and that such modifications are also within the scope of the present invention.

### [Explanation of Reference Numerals]

- 10, 60, 100: Automotive lamp
- 12, 122, 132: Cover
- 14, 64, 104, 121, 131: Lamp body
- 18: LED
- 20: Light guide
- 24: Step
- 62: Outer lens
- 68: Bulb
- 69: Reflector
- 70,: 90 Inner lens
- 82: Fish-eye step
- 92: Cylindrical step
- 102: Lens
- 108: Light bulb
- 109: Switch knob
- 110: Electric circuit
- 120: Ceiling lamp
- 124, 134: Lamp
- 130: Street lamp

### [Industrial Applicability]

The present invention is applicable to an illumination device and an automotive lamp using light control members such as a light guide and a lens.

## Claims

1. An illumination device comprising:
a light source mounting part configured to mount a light source thereon; and
a light control member configured to emit light frontward by controlling the light emitted from the light source,
the light control member including a plurality of steps with which the light emitted from the light source is controlled,
wherein a pitch of the plurality of steps is less than or equal to 0. 5 mm.

2. An illumination device according to claim 1, wherein the light control member is a light guide that has the light, emitted from the light source, enter from one end surface thereof and that emits the light frontward from an emission surface along an extending direction by guiding the light inside the light guide, and
wherein the plurality of steps of the light guide reflect the light traveling inside the light guide toward the emission surface.

3. An illumination device according to claim 2, wherein the plurality of steps include a plurality of triangle-shaped steps.

4. An illumination device according to claim 1, wherein the light control member is a lens where a plurality of steps are formed in order to emit the light, emitted from the light source, as light having a required light distribution characteristic.

5. An illumination device according to claim 4, wherein the plurality of steps formed in the lens include a plurality of fish-eye steps arranged in grids.

6. An illumination device according to claim 4, wherein the plurality of steps formed in the lens include a plurality of cylindrical steps arranged side by side in a predetermined direction.

7. An illumination device according to claim 5 or claim 6, wherein a radius of curvature R of each of the plurality of steps is set such that R ≤ 1 mm.

8. An illumination device according to claim 5 or claim 6, wherein, when a pitch between each of the plurality of steps is denoted by P, a radius of curvature R of each step is set such that R ≤ P×2.

9. An automotive lamp including an illumination device according to any one of claim 1 to claim 8.
